(19) Europäisches Patentamt
European Patent Office
Office européen des brevets

(11) **EP 2 463 518 B1**

(12) **EUROPÄISCHE PATENTSCHRIFT**

(45) Veröffentlichungstag und Bekanntmachung des Hinweises auf die Patenterteilung:
**02.11.2016 Patentblatt 2016/44**

(51) Int Cl.:
*F03D 7/02* *(2006.01)*

(21) Anmeldenummer: **11009007.3**

(22) Anmeldetag: **12.11.2011**

(54) **Verfahren zum Betrieb einer pitchgeregelten Windenergieanlage**

Method for operating a pitch controlled wind energy assembly

Procédé de fonctionnement d'une éolienne avec contrôle du pas

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.12.2010 DE 102010054013**

(43) Veröffentlichungstag der Anmeldung:
**13.06.2012 Patentblatt 2012/24**

(73) Patentinhaber: **Nordex Energy GmbH**
**22419 Hamburg (DE)**

(72) Erfinder:
• **Kabatzke, Wolfgang**
**21502 Geesthacht (DE)**

• **Rochholz, Hermann**
**39100 Bozen (IT)**

(74) Vertreter: **Hauck Patentanwaltspartnerschaft mbB**
**Postfach 11 31 53**
**20431 Hamburg (DE)**

(56) Entgegenhaltungen:
**EP-A2- 1 918 581        EP-A2- 1 939 445**
**EP-A2- 2 177 754        DE-A1- 10 109 553**
**DE-B3-102009 025 445    US-A1- 2010 140 938**

**Beschreibung**

Die vorliegende Erfindung betrifft ein Verfahren zum Betrieb einer pitchgeregelten Windenergieanlage, bei der abhängig von einer Drehzahl des Generators oder Rotors ein Sollwert für ein Generatormoment vorgegeben wird. Die Zuordnungsvorschrift für den Sollwert des Generatormoments abhängig von der Drehzahl besitzen einen Übergangspunkt, in dem ein Übergang von einem Teillastbetrieb in einen Nennlastbetrieb erfolgt. In dem Nennlastbetrieb erfolgt vorrangig eine Regelung der Drehzahl durch eine Verstellung des Blatteinstellwinkels für mindestens ein Rotorblatt.

Üblicherweise wird bei der Entwicklung von Windenergieanlägen von einer definierten Normluftdichte von beispielsweise $\rho = 1,225$ kg/m$^3$ ausgegangen.

Aus DE 101 09 553 B4 ist ein Verfahren zur Steuerung einer Windenergieanlage mit einem elektrischen Generator unter Verwendung von Luftdichtedaten am Ort der Windenergieanlage bekannt. Bei dem Verfahren wird mittels einer Steuerungsvorrichtung, die die Luftdichtedaten verarbeitet, der Generator der Windenergieanlage gesteuert und abhängig von der Luftdichte Leistungsdaten des Generators eingestellt. Bei dem bekannten Verfahren erfolgt eine Berücksichtigung der Höhe des Aufbauortes der Windenergieanlage über Normalnull, wobei die geringere Luftdichte in der Leistungskennlinie Berücksichtigung findet. Dadurch kann die einer Rotordrehzahl und damit einer bestimmten Schnelllaufzahl zugeordnete, von der Windenergieanlage zu erzeugende Leistung entsprechend angepasst, also herabgesetzt werden, so dass das Generatormoment in Folge einer durch die Steuerungsvorrichtung eingespeisten Erregerleistung das über den Generator bereitgestellte Drehmoment nicht überschreitet. Insgesamt soll der über die Leistungskennlinie festgelegte Wirkungsgrad erhalten bleiben und dem Wind die maximale Energie entnommen werden.

Aus EP 1 939 445 A2 ist ein Verfahren zur Berechnung einer Leistungskurve für hochgelegene Standorte bekannt. Hierbei wird ausgehend von einer Beziehung zwischen dem Leistungskoeffizienten $C_P$ und der Schnelllaufzahl $\lambda$ ein Verhältnis zwischen der elektrischen Ausgangsleistung P und der Windgeschwindigkeit ermittelt.

Aus EP 1 918 581 A2 ist eine Windergieangienlage bekannt, bei der die Ausgangsleistung reduziert wird, wenn die Temperatur der Umgebungsluft unter einen vorbestimmten Schwellwert sinkt. Hintergrund für die Leistungsreduzierung ist, dass bei Temperaturen von unter -20° C der Betrieb der Windenergieanlage andere Lastberechnungen erfordern kann.

Aus EP 2 177 754 A2 ist ein Verfahren und eine Vorrichtung zur Verstellung des Blatteinstellwinkels in optimaler Weise bekannt. Hierzu wird für ein Rotorblatt ein minimaler Pitchwinkel definiert.

Bei den Auswirkungen der Luftdichte auf den Ertrag der Windenergieanlage ist zu berücksichtigen, dass es bei pitchgeregelten Windenergieanlagen bei einer Veränderung der Luftbedingungen zu aerodynamischen Stall-Effekten mit einem unerwünschten Strömungsabriss kommen kann.

Der Erfindung liegt die Aufgabe zugrunde, ein verbessertes Verfahren zum Betrieb einer pitchgeregelten Windenergieanlage bereitzustellen, bei dem stabil in den Vollastbetrieb geschaltet wird und gleichzeitig unerwünschte Stall-Effekte an dem Rotorblatt vermieden werden.

Erfindungsgemäß wird die Aufgabe durch ein Verfahren mit den Merkmalen aus Anspruch 1 gelöst. Vorteilhafte Ausgestaltungen bilden den Gegenstand der Unteransprüche.

Bei dem erfindungsgemäßen Verfahren erfolgt ein Betrieb einer pitchgeregelten Windenergieanlage, bei dem abhängig von einer Drehzahl n des Generators oder des Rotors ein Sollwert M für das Generatormoment vorgegeben wird. Für die Vorgabe des Sollwerts des Generatormoments ist ein Übergangspunkt (n3, M3) vorgesehen, in dem aus dem Teillastbetrieb in den Volllastbetrieb gewechselt wird. Allgemein ist bei dem Betrieb der Windenergieanlage zwischen einem Teillastbetrieb und einem Volllastbetrieb, der gelegentlich auch als Nennlastbetrieb bezeichnet wird, zu unterscheiden. Im Teillastbetrieb wird mit zunehmender Drehzahl der Sollwert für das Generatormoment erhöht. Im Volllastbetrieb erfolgt eine Regelung der Drehzahl des Generators durch ein Verstellen des Blatteinstellwinkels (Pitchwinkel) für mindestens ein Rotorblatt. Der Übergang von dem Teillastbetrieb in den Volllastbetrieb erfolgt in einem Übergangspunkt, der durch einen Wert für die Drehzahl n3 und einen Sollwert für das Generatormoment M3 definiert ist. Erfindungsgemäß wird ein Wert für die Luftdichte ermittelt. Weiterhin sieht das erfindungsgemäße Verfahren vor, einen Vorpitchwinkel für mindestens ein Rotorblatt ab einer Vorpitchdrehzahl einzustellen, wobei die Vorpitchdrehzahl kleiner als die Drehzahl n3 im Übergangspunkt ist. Mit Vorpitchwinkel wird hier ein Blatteinstellwinkel bezeichnet, der bereits im Teillastbetrieb der Windenergieanlage vorliegt und sich bis in den Nennlastbetrieb der Windenergieanlage fortsetzen kann, bis eine reguläre Regelung im Nennlastbetrieb einsetzt. Durch das Einstellen des Vorpitchwinkels hat die Windenergieanlage im Übergangspunkt bereits einen von Null verschiedenen Blatteinstellwinkel. Erfindungsgemäß hängt der Wert des Vorpitchwinkels von dem ermittelten Wert für die Luftdichte ab, wobei die Abhängigkeit derart definiert ist, dass bei geringerer Luftdichte ein größerer Vorpitchwinkel als bei größerer Luftdichte eingestellt wird. Im Gegensatz zu einer Lösung, bei der der Vorpitchwinkel für den Übergangspunkt eine Konstante ist, wird bei dem erfindungsgemäßen Verfahren durch einen luftdichteabhängigen Vorpitchwinkel vermieden, dass bei hoher Luftdichte ein zu großer Vorpitchwinkel gewählt wird. Die Erfindung beruht auf der Erkenntnis, dass bei hoher Luftdichte ein großer Vorpitchwinkel größtenteils unnötig und schädlich für den Ertrag der Windenergieanlage ist.

In einer bevorzugten Ausgestaltung des erfindungsgemäßen Verfahrens ist der Pitchwinkel ab einer minimalen Drehzahl bis zum Erreichen der Vorpitchdrehzahl konstant, vorzugsweise mit einem Wert von Null Grad vorgegeben. Die Vorpitchdrehzahl ist eine erste Drehzahl, bei der das Vorpitchen beginnt. Bei dieser Ausgestaltung des erfindungsgemäßen Verfahrens wird für den Drehzahlbereich zwischen der minimalen Drehzahl und der Vorpitchdrehzahl ein konstanter Blatteinstellwinkel vorgegeben.

In einer bevorzugten Ausgestaltung wird der Pitchwinkel ab der Vorpitchdrehzahl bis zum Erreichen einer maximalen Vorpitchdrehzahl, erhöht, wobei die maximale Vorpitchdrehzahl größer oder gleich der Drehzahl im Übergangspunkt ist. Die Erhöhung kann linear, abschnittsweise linear oder in einer anderen Form erfolgen. In dieser Ausgestaltung des Verfahrens ist sichergestellt, dass der Pitchwinkel beginnend mit dem Erreichen der Vorpitchdrehzahl erhöht wird, bis der Übergangspunkt erreicht ist. Bevorzugt erfolgt die Erhöhung des Pitchwinkels vollständig oder abschnittsweise linear.

In einer bevorzugten Ausgestaltung ist der Wert des Vorpitchwinkels bei einer Drehzahl, beispielsweise der Drehzahl im Übergangspunkt durch folgende Formel vorgegeben:

$$\varphi_{pre} = \max\left(\varphi_{lim}, \; \varphi_b + \Delta\varphi \left(1 - \frac{\rho}{\rho_{norm}}\right)\right),$$

wobei $\varphi_{lim}$ $\varphi_b$ und $\Delta\varphi$ Konstanten für den Pitchwinkel sind und $\rho_{norm}$ eine unter Normalbedingungen herrschende Luftdichte bezeichnet. $\varphi_{lim}$ ist eine rotorblattspezifische Konstante, die von der Schnelllaufzahl abhängt. Der vorstehende Zusammenhang zwischen Vorpitchwinkel $\varphi_{pre}$ und Luftdichte $\rho$ stellt sicher, dass bei niedriger Luftdichte ein größerer Vorpitchwinkel als bei hoher Luftdichte gewählt wird. Die ermittelte Luftdichte $\rho$ geht in den Ausdruck für den Vorpitchwinkel ein. Arbeitet die Windenergieanlage bei einer Luftdichte, die der unter Normalbedingungen herrschenden Luftdichte $\rho_{norm}$ entspricht, so ergibt sich der Vorpitchwinkel zu $\varphi_b$. Ist die Luftdichte deutlich kleiner als die unter Normalbedingungen herrschende Luftdichte, so wird der Vorpitchwinkel $\varphi_{pre}$ um einen Bruchteil von $\Delta\varphi$ erhöht. Die Funktion "max(.../...))" wählt den grösseren der beiden Argumentenwerte aus und vermeidet so negative Vorpitchwinkel. Der Wert von $\varphi_b$ liegt in der Größenordnung von "1°", $\Delta\varphi$ liegt in der Größenordnung von "10°".

Bei dem erfindungsgemäßen Verfahren wird die Luftdichte abhängig von einer gemessenen Lufttemperatur T und einem gemessenen Luftdruck p sowie einem Wert für die Luftfeuchte $\psi$ bestimmt. Die Werte für die Lufttemperatur und den Luftdruck werden hierbei bevorzugt direkt an der Windenergieanlage gemessen. Der Wert $\psi$ für die Luftfeuchte kann abhängig von einer Tages- und/oder Jahreszeit vorgegeben werden. Bei dieser Vorgabe wird ein aus Erfahrungswerten gewonnener Wert $\psi$ für die Luftfeuchte entsprechend vorgegeben. Alternativ ist es auch möglich, die Luftfeuchte $\psi$ direkt zu messen.

Die Erfindung wird nachfolgend an einem Ausführungsbeispiel näher erläutert. Es zeigen:

Fig. 1    einen Verlauf des Sollwerts für das Generatormoment über der Drehzahl und

Fig. 2    die Änderung des Pitchwinkels abhängig von der Drehzahl.

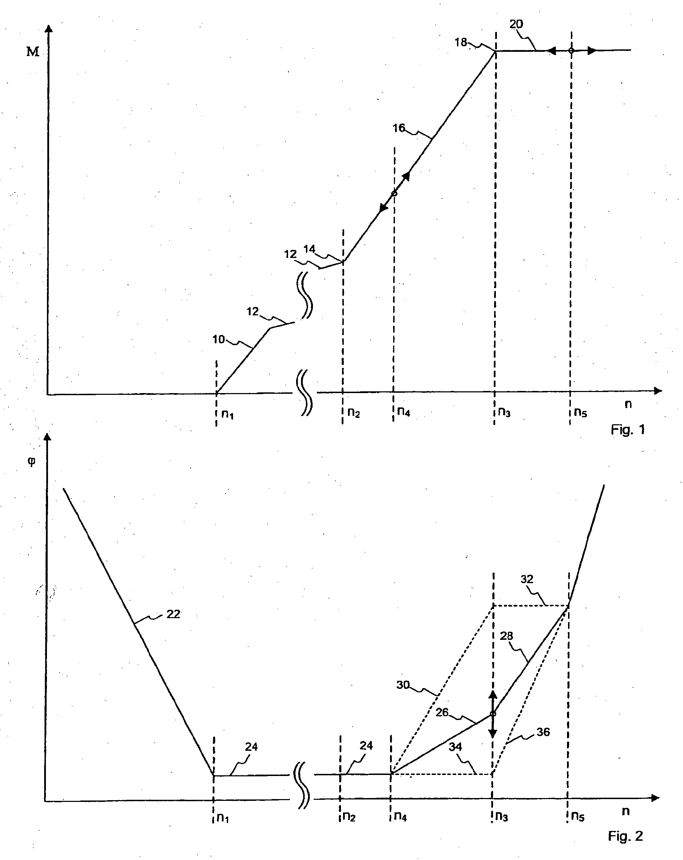

Fig. 1 zeigt den Sollwert für das Generatormoment M über der Generatordrehzahl n. Für den Verlauf des Sollwertes für das Generatormoment können insgesamt vier Abschnitte unterschieden werden. In einem ersten Abschnitt 10 erfolgt ein lineares Ansteigen des Sollwerts für das Generatormoment mit zunehmender Drehzahl.

In einem zweiten Abschnitt 12 folgt der Sollwert für das Generatormoment der idealen Kennlinie des Rotors. Der Sollwert des Generatormoments wird über eine Funktion für die optimale Leistung $P_{opt}$ berechnet, die wie folgt lautet:

$$P_{opt}(n) = \left(2 * \pi * R * \frac{n}{i_G} * \frac{1}{60 * \lambda_{Opt}}\right)^3 * \pi * R^2 * \frac{\rho}{2} * C_{p,opt} \;,$$

wobei R den Radius des Rotorblatts bezeichnet, n die Generatordrehzahl, $i_G$ das Übersetzungsverhältnis des Getriebes, $\lambda_{Opt}$ die optimale Schnelllaufzahl des Rotorblatts, $\rho$ die Luftdichte und $C_{p,opt}$ den optimalen Leistungskoeffizienten. Entlang dem Abschnitt 12 wird der Sollwert für das Generatormoment analytisch gemäß der vorstehenden Formel berechnet, wobei die Leistung über die Kreisfrequenz des Generators $\omega = 2\pi n$ gemäß M = P/$\omega$) in den Sollwert M für das Generatormoment umgerechnet wird.

Im Punkt 14 liegt ein Knickpunkt zwischen dem zweiten Abschnitt 12 und einem dritten Abschnitt 16 vor. Mit dem dritten Abschnitt 16 wird zur Erzielung einer optimalen Energieausbeute die ideale Kennlinie 12 verlassen und der Sollwert für das Generatormoment mit zunehmender Drehzahl des Generators stärker erhöht. In dem dargestellten Ausführungsbeispiel ist der dritte Abschnitt 16 als ein linear ansteigender Abschnitt dargestellt. Andere, nicht lineare Formen des Anstiegs, zwischen dem Knickpunkt 14 und einem Übergangspunkt 18 sind ebenfalls möglich.

In dem Übergangspunkt 18 geht die Windenergieanlage in ihren Volllastbetrieb 20 über. In diesem Bereich gilt, dass die Leistung der Windenergieanlage konstant zu halten ist, wobei die Leistung Proportional zur Drehzahl und zum Drehmoment des Generators ist:

$$P = M * \omega,$$

wobei $\omega = 2\,\pi\,n$ die Kreisfrequenz des Generators ist.

Bei dem erfindungsgemäßen Verfahren wird in dem dritten Abschnitt 16 begonnen, einen luftdichteabhängigen Pitchwinkel vorzugeben. Fig. 2 zeigt den Verlauf des Pitchwinkels $\varphi$ abhängig von der Drehzahl. Für Drehzahlen kleiner $n_1$, bei denen die Windenergieanlage hochgefahren wird, wird der Pitchwinkel zunächst entlang der Kurve 22 vermindert, bis die Drehzahl $n_1$ erreicht ist.

Bei dem in Fig. 2 dargestellten Ausführungsbeispiel bleibt der Pitchwinkel zunächst bei 0° auf dem Abschnitt 24 der Kennlinie. Beginnend bei einer Vorpitchdrehzahl $n_4$, wird der Pitchwinkel bis zum Erreichen der Drehzahl $n_5$ erhöht. Wie in Fig. 2 dargestellt, wird der Pitchwinkel $\varphi$ in dem für das Vorpitchen vorgesehenen Drehzahlintervall, beginnend mit der Drehzahl $n_4$ bis zur Drehzahl $n_5$, bei der ein Volllastbetrieb der Windenergieanlage bereits vorliegt, entlang der Abschnitte 26, 28 abschnittsweise vorzugsweise linear erhöht. Wird eine niedrigere Luftdichte als die bei Normalbedingungen vorliegende Luftdichte festgestellt, so wird in dem Drehzahlintervall der Vorpitchwinkel erhöht. Der Vorpitchwinkel läuft dann, beispielsweise abschnittsweise linear, entlang der Linien 30 und 32. Liegt eine höhere Luftdichte vor, so wird ein niedrigerer Pitchwinkel gewählt, der beispielsweise linear entlang der Linien 34 und 36 verläuft.

Um den luftdichteabhängigen Vorpitchwinkel zu bestimmen, wird in dem für das Vorpitchen vorgesehenen Drehzahlintervall eine Drehzahl ausgewählt und der Vorpitchwinkel für die ausgewählte Drehzahl gemäß der vorstehenden Formel für $\varphi_{pre}$ abhängig von der Luftdichte bestimmt. In dem dargestellten Beispiel wurde die Drehzahl $n_3$ als Drehzahl aus dem Drehzahlintervall ausgewählt. Es hätte auch jede andere Drehzahl aus dem Drehzahlintervall ausgewählt werden können.

Der genaue Verlauf des Vorpitchwinkels ergibt sich dann, indem zwischen einem Vorpitchwinkel von Null bei der Drehzahl $n_4$ zu dem luftdichteabhängigen Wert bei der Drehzahl $n_3$ interpoliert wird. Der weitere Verlauf des Vorpitchwinkels ergibt sich dann, indem von dem luftdichteabhängigen Wert für die Drehzahl $n_3$ zu einem vorbestimmten Wert für den Pitchwinkel bei der maximalen Vorpitchdrehzahl $n_5$ interpoliert wird. Dieser vorbestimmte Wert des Vorpitchwinkels bei der maximalen Vorpitchdrehzahl $n_5$ entspricht einem üblichen Pitchwinkel im Nennlastbetrieb für die Drehzahl $n_5$. Auf diese Weise ist der Wert des Vorpitchwinkels in dem Intervall $n_4$ bis $n_5$ über die vorliegende Erfindung luftdichteabhängig und schließt bei der Drehzahl $n_5$ an die Regelung des Pitchwinkels im Nennlastbetrieb an.

**Patentansprüche**

1. Verfahren zum Betrieb einer pitchgeregelten Windenergieanlage mit mindestens einem um seine Längsachse verstellbaren Rotorblatt und einem Generator, bei der abhängig von einer Drehzahl (n) des Generators oder des Rotors ein Sollwert für das Generatormoment (M) vorgegeben wird, wobei ein Übergangspunkt ($n_3$, $M_3$) vorgesehen ist, in dem aus einem Teillastbetrieb in einen Volllastbetrieb umgeschaltet wird, **gekennzeichnet durch** die Schritte

   - Ermitteln eines Wertes für eine Luftdichte ($\rho$),
   - Einstellen eines Blatteinstellwinkels für den Teillastbetrieb als Vorpitchwinkel ($\varphi_{pre}$) ab einer Vorpitchdrehzahl ($n_4$), die kleiner als die Drehzahl ($n_3$) in dem Übergangspunkt ist,
   - wobei der Wert des Vorpitchwinkels ($\varphi_{pre}$) von dem ermittelten Wert der Luftdichte ($\rho$) abhängig ist, derart, dass bei geringerer Luftdichte ($\rho$) ein größerer Vorpitchwinkel ($\varphi_{pre}$) als bei größerer Luftdichte ($\rho$) eingestellt wird.

2. Verfahren nach Anspruch 1, **dadurch gekennzeichnet, dass** der Blatteinstellwinkel (Pitchwinkel) ab einer minimalen Drehzahl ($n_1$) bis zum Erreichen der Vorpitchdrehzahl ($n_4$) konstant ist.

3. Verfahren nach Anspruch 2, **dadurch gekennzeichnet, dass** der konstante Wert des Blatteinstellwinkels (Pitchwinkels) Null ist.

4. Verfahren nach einem der Ansprüche 1 bis 3, **dadurch gekennzeichnet, dass** der Blatteiristellwinkel (Pitchwinkel) ab der Vorpitchdrehzahl ($n_4$) bis zum Erreichen einer maximalen Vorpitchdrehzahl ($n_5$) erhöht wird, wobei die ma-

ximale Vorpitchdrehzahl (n$_5$ größer oder gleich der Drehzahl (n$_3$) in dem Übergangspunkt ist.

**5.** Verfahren nach Anspruch 4, **dadurch gekennzeichnet, dass** der Blatteinstellwinkel (Pitchwinkel) linear erhöht wird.

**6.** Verfahren nach einem der Ansprüche 1 bis 5, **dadurch gekennzeichnet, dass** der Wert des Vorpitchwinkels ($\varphi_{pre}$) bei einer vorbestimmten Drehzahl sich ergibt als:

$$\varphi_{\text{pre}} = \max \left( \varphi_{\lim}, \varphi_b + \Delta\varphi \left( 1 - \frac{\rho}{\rho_{norm}} \right) \right),$$

wobei ($\varphi_{lim}$), ($\varphi_b$) und ($\Delta\varphi$) konstante Blatteinstellwinkel (Pitchwinkel), ($\rho_{norm}$) eine unter Normalbedingungen herrschende Luftdichte und ($\rho$) die ermittelte Luftdichte bezeichnen.

**7.** Verfahren nach Anspruch 6, **dadurch gekennzeichnet, dass** der Vorpitchwinkel ($\varphi_{pre}$) für die Drehzahl (n$_3$) in dem Übergangspunkt bestimmt wird.

**8.** Verfahren nach einem der Ansprüche 1 bis 7, **dadurch gekennzeichnet, dass** die Luftdichte ($\rho$) abhängig von einer gemessenen Lufttemperatur (T), einem gemessenen Luftdruck (p) und einem Wert für die Luftfeuchte ($\psi$) bestimmt wird.

**9.** Verfahren nach Anspruch 8, **dadurch gekennzeichnet, dass** der Wert für die Luftfeuchte ($\psi$) abhängig von einer Tages- und/oder Jahreszeit vorgegeben wird.

**10.** Verfahren nach Anspruch 8 oder 9, **dadurch gekennzeichnet, dass** der Wert für die Luftfeuchte ($\psi$) gemessen wird.

## Claims

**1.** A method for operating a pitch-controlled wind turbine having at least one rotor blade that is adjustable about its longitudinal axis, and a generator, wherein a setpoint for the generator torque (M) is set depending on a rotary speed (n) of the generator or rotor, wherein a transition point (n$_3$, M$_3$) is provided at which switching occurs from partial load operation to full load operation;
**characterized by** the steps:

- determination of a value for an air density ($p$),
- adjustment of a blade pitch angle for partial load operation as a preliminary pitch angle ($\varphi_{pre}$) starting at a preliminary pitch rotary speed (n$_4$) that is less than the rotary speed (n$_3$) at the transition point,
- wherein the value of the preliminary pitch angle ($\varphi_{pre}$) depends on the calculated value of the air density ($p$) such that, when the air density ($p$) is low, a greater preliminary pitch angle ($\varphi_{pre}$) is set than when the air density ($p$) is greater.

**2.** The method according to claim 1, **characterized in that** the blade pitch angle (pitch angle) is constant starting at a minimum rotary speed (n$_1$) until the preliminary pitch rotary speed (n$_4$) is achieved.

**3.** A method according to claim 2, **characterized in that** the constant value of the blade pitch angle (pitch angle) is zero.

**4.** The method according to one of claims 1 to 3, **characterized in that** the blade pitch angle (pitch angle) is increased starting at the preliminary pitch rotary speed (n$_4$) until a maximum preliminary pitch rotary speed (n$_5$) is achieved, wherein the maximum preliminary pitch rotary speed (n$_5$) is greater than or equal to the rotary speed (n$_3$) at the transition point.

**5.** The method according to claim 4, **characterized in that** the blade pitch angle (pitch angle) is increased linearly.

**6.** The method according to one of claims 1 to 5 **characterized in that** at a predetermined rotary speed, the value of the preliminary pitch angle ($\varphi_{pre}$) results as:

$$\varphi_{\text{pre}} = \max \left( \varphi_{\text{lim}}, \varphi_b + \Delta\varphi \left( 1 - \frac{\rho}{\rho_{norm}} \right) \right),$$

wherein ($\varphi_{\text{lim}}$), ($\varphi_b$) and ($\Delta\varphi$) to designate constant blade pitch angles (pitch angles), ($\rho_{norm}$) designates an air density predominating under normal conditions, and ($\rho$) designates the calculated air density.

7. The method according to claim 6, **characterized in that** the preliminary pitch angle ($\varphi_{\text{pre}}$) is determined for the rotary speed ($n_3$) at transition point.

8. The method according to one of claims 1 to 7, **characterized in that** the air density ($\rho$) is determined depending on a measured air temperature ($T$), a measured air pressure ($\rho$) and a value for the humidity ($\psi$).

9. The method according to claim 8, **characterized in that** the value for the humidity ($\psi$) is set depending upon a time of day and/or season.

10. The method according to claim 8 or 9, **characterized in that** the value for the humidity ($\psi$) is measured.

## Revendications

1. Procédé de contrôle d'une éolienne avec contrôle du pas, avec au moins une pale de rotor réglable autour de son axe longitudinal et un générateur, dans laquelle une valeur de consigne pour le moment du générateur (M) est spécifiée en fonction d'une vitesse de rotation (n) du générateur ou du rotor, un point de transition ($n_3$, $M_3$) étant prévu dans lequel il se produit une commutation à partir d'un mode de charge partielle vers un mode de pleine charge, **caractérisé par** les étapes suivantes :

   - détermination d'une valeur pour une densité de l'air (p),
   - réglage d'un angle de réglage de pale pour le mode de charge partielle en tant que pré-angle de pas ($\psi_{\text{pre}}$) à partir d'une pré-vitesse de rotation de pas ($n_4$) qui est plus faible que la vitesse de rotation ($n_3$) au point de transition,
   - la valeur du pré-angle de pas ($\psi_{\text{pre}}$) étant fonction de la valeur déterminée de la densité de l'air ($\rho$) de telle sorte que, pour une densité de l'air ($\rho$) plus faible, il est réglé un pré-angle de pas ($\psi_{\text{pre}}$) plus élevé que dans le cas d'une densité de l'air ($\rho$) plus élevée.

2. Procédé selon la revendication 1, **caractérisé en ce que** l'angle de réglage de pale (angle de pas) est constant à partir d'une vitesse de rotation ($n_1$) minimale jusqu'à l'obtention de la pré-vitesse de rotation de pas ($n_4$).

3. Procédé selon la revendication 2, **caractérisé en ce que** la valeur constante de l'angle de réglage de pale (angle de pas) est nulle.

4. Procédé selon l'une des revendications 1 à 3, **caractérisé en ce que** l'angle de réglage de pale (angle de pas) est augmenté à partir de la pré-vitesse de rotation de pas ($n_4$) jusqu'à l'obtention d'une pré-vitesse de rotation de pas ($n_5$) maximale, la pré-vitesse de rotation de pas ($n_5$) maximale étant supérieure ou égale à la vitesse de rotation ($n_3$) au point de transition.

5. Procédé selon la revendication 4, **caractérisé en ce que** l'angle de réglage de pale (angle de pas) est augmenté de façon linéaire.

6. Procédé selon l'une des revendications 1 à 5, **caractérisé en ce que** la valeur du pré-angle de pas ($\psi_{\text{pre}}$) pour une vitesse de rotation prédéfinie est le résultat de :

$$\varphi_{\text{pre}} = \max \left( \varphi_{\text{lim}}, \varphi_b + \Delta\varphi \left( 1 - \frac{\rho}{\rho_{norm}} \right) \right),$$

où ($\psi_{\text{lim}}$), ($\psi_b$) et ($\Delta\varphi$) désignent des angles de réglage de pale (angles de pas) constants, ($\rho_{norm}$) désigne une densité de l'air régnant dans des conditions normales, et ($\rho$) désigne la densité de l'air déterminée.

**7.** Procédé selon la revendication 6, **caractérisé en ce que** le pré-angle de pas ($\varphi_{pre}$) pour la vitesse de rotation ($n_3$) est défini au point de transition.

**8.** Procédé selon l'une des revendications 1 à 7, **caractérisé en ce que** la densité de l'air ($\rho$) est définie en fonction d'une température de l'air (T) mesurée, d'une pression de l'air ($\rho$) mesurée et d'une valeur pour l'humidité de l'air ($\psi$).

**9.** Procédé selon la revendication 8, **caractérisé en ce que** la valeur pour l'humidité de l'air ($\psi$) est spécifiée en fonction d'une heure de la journée et/ou d'une saison.

**10.** Procédé selon la revendication 8 ou 9, **caractérisé en ce que** la valeur pour l'humidité de l'air ($\psi$) est mesurée.

Fig. 1

Fig. 2

8

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10109553 B4
- EP 1939445 A2
- EP 1918581 A2
- EP 2177754 A2